Europäisches Patentamt

(19) European Patent Office

Office européen des brevets

(11) Publication number: **0 059 922**

**A1**

(12) # EUROPEAN PATENT APPLICATION

(21) Application number: 82101594.8

(22) Date of filing: 02.03.82

(51) Int. Cl.³: **A 01 G 25/02**

(30) Priority: 06.03.81 US 241027

(43) Date of publication of application:
15.09.82 Bulletin 82/37

(84) Designated Contracting States:
AT BE CH DE FR GB IT LI LU NL SE

(71) Applicant: INTERNATIONAL IRRIGATION TRADING, LTD
Vallis Bldg. Hamilton 5-31
Bermuda(BM)

(72) Inventor: Ruskin, Rodney
The Pillars Harrington Sound Road
Smith's Parish(BM)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 43
D-8000 München 22(DE)

(54) Drip irrigation unit and method for making same.

(57) A drip irrigation system provides drip action of water flowing under pressure in an irrigation supply pipe (12). A drip emitter unit (10) secured to the exterior of the supply pipe (12) receives water from the supply pipe (12), passes the water through a labyrinthine channel (27) formed internally between the drip emitter (10) and the exterior wall of the supply pipe (12), and discharges the water from the internal channel at a greatly reduced pressure drop so that water drips at a slow rate. In one embodiment, the drip emitter (10) is bonded to the exterior wall of the irrigation supply pipe (12) by magnetic induction heating techniques. A region of fusible bonding material (38) is disposed around the outside boundary of the labyrinthine channel (27). The emitter (10) is placed over the supply pipe (12) so the fusible bonding material (38) overlies the exterior wall of the pipe (12), and the bonding material (38) is fused by magnetic induction heating techniques to weld the inside of the emitter (10), around the exterior of the labyrinthine channel (27), to the exterior wall of the pipe (12).

Fig. 1

Fig. 2

Croydon Printing Company Ltd.

13455:WGM                    -1-

DRIP IRRIGATION UNIT AND METHOD FOR MAKING SAME

## Background

### Field of the Invention

This invention relates generally to drip irrigation systems, and more particularly, to a drip irrigation unit that receives water under pressure from an irrigation supply pipe and discharges the water from the supply pipe at a uniform drip rate. The invention also relates to techniques for making such a drip irrigation unit.

### Description of the Prior Art

Drip irrigation systems usually include a continuous irrigation water supply line with drip emitter or dispensing units installed in the line, or on the line, often at regular intervals. Irrigation water flows through the supply line under pressure, and a small amount of water continuously drips out at the intervals where the drip emitter units are installed. Drip irrigation has proved to be highly successful in producing greater growth of vegetation for the same amount of water when compared with conventional irrigation techniques.

A number of different drip irrigation systems have been proposed. These vary from the cheapest and simplist of systems, namely, a hole in the wall of the water supply line, to expensive and complex multi-component dripper units.

There is a need for a low cost dripper system having reliable performance in terms of uniform flow rates and resistance to clogging at operating pressures of say between 10 to 15 psi. A single hole in the water supply line may be the cheapest of drip systems, but such an approach is not satisfactory in most cases. The hole in the pipe wall must be of minute size to produce the desired dripping rate. However, the required hole size is so small that blockage is almost inevitable at a number of places along the pipeline, even with filtering. Moreover, a minute hole limits the operating pressure in the supply line to a maximum of about 5 psi. At a higher more desirable line pressure of say 15 psi, the water jets or sprays through the holes in the pipe wall. By reliably running a drip irrigation system at a higher operating pressure of say 15 psi, longer dripper lines can be used; more output, in terms of gallons of water per hour, is produced; and the system can work on undulating ground (up and down slopes) as well as on flat ground.

A large number of more sophisticated drip irrigation systems have been developed for the purpose of overcoming the problems inherent in a single hole in the wall of the irrigation line. A common and successful approach involves use of separate emitter or dripper units installed in or on the supply pipe. The emitter unit taps off a portion of the water flowing in the supply line and passes the water through a labyrinth or other circuitous path that produces a large pressure drop in the water and discharges it at a uniform drip rate. Generally, such pressure-reducing labyrinthine emitter units are successful because they can use a large enough hole in the supply pipe and a wide enough passage through the labyrinth to avoid clogging in most cases, and they can be used at higher line pressures of say 15 psi (although many of these drippers create blockages that inherently reduce the maximum operating pressure).

These is a need for a drip irrigation emitter that is simple in structure so that manufacturing costs are low, while also having the capability of being assembled with reasonably low capital and labor costs. It is also desirable that the emitter be capable of use with thin wall pipe as well as more permanent heavy wall pipe. Orchards and vineyards, for example, commonly use permanent drip irrigation systems, whereas cheaper thin wall pipe can be used for temporary drip irrigation sites. A low cost drip irrigation system can be particularly important because of its use in temporary irrigation sites where irrigation systems of the lowest possible cost are needed. For example, inexpensive temporary irrigation systems are used because of harvesting techniques where crops such as cane sugar are harvested by plowing under the entire field, including the irrigation system. Temporary irrigation systems also are used on temporary growing sites for row crops such as lettuce, tomatoes, turnips and cotton, for example.

The drip irrigation systems presently known are not entirely satisfactory in terms of low cost, reliable uniform drip rates, non-interference with free flow in the dripper line, resistance to clogging, and capability of use with thin wall pipe as well as more permanent heavy wall pipes. One presently known drip irrigation unit is an insert type system in which a portion of the drip irrigation unit is inserted into one end of an irrigation pipe. The end of another irrigaton pipe is passed over the remainder of the drip irrigation unit. Flow is between the exterior labyrinth surface of the inserted unit and the interior of the irrigation pipe wall. The fit is a cold friction fit which can introduce serious quality control problems, since the annular spaces can be subject to considerable variation because of lack of uniformity commonly present in the pipe inner diameter. This unit must be used with heavy wall pipe because internal flow pressures can cause a thin wall pipe to expand outwardly just enough to allow the water passing through the labyrinth to skip over teeth in the labyrinth and short circuit a portion of the labyrinth which, in turn, can produce an undesired change in drip rate at the end of the labyrinth.

Another insert type drip irrigation unit is a complex pressure-compensated unit in which the labyrinth for providing the pressure drop is bonded to the interior wall of the irrigation pipe by bonding legs. Pressure compensation is provided by a rubber diaphragm which is pressed into and blocks part of the labyrinth as pressure is increased within the pipe.

Another insert type drip irrigation unit is assembled during extrusion of the plastic irrigation pipe. The unit is made by heating the plastic pipe (from the heat of extrusion). The dripper emitter unit, which is at room temperature, is then inserted into the desired position within the pipe. Heat from the molten pipe bonds the interior of the pipe to the exterior of the inserted dripper unit. Such extrusion equipment is expensive, in part, because it requires precise temperature control during assembly. That is, good adhesion must be provided between the pipe and the emitter to ensure that the dripper will function properly hydraulically. If the temperature is too high, the softened pipe wall can flow into portions of the passageway

13455:WGM                    -5-

through the labyrinth.   If the temperature is too low, the adhesion is poor.

A principal limitation of such insert type units is hydraulic interference with flow through the interior of the irrigaton pipe.  As a result, the possible free flow through the irrigation pipe is reduced which, in use, reduces the useful length of the dripper line.

Another drip irrigation system is a so-called clip-on bayonet system, in which a bayonet is passed through the wall of an irrigation pipe and the unit itself is mounted exteriorly of the pipe.  Water is drawn through the bayonet into a labyrinth formed in the interior of the exterior dripper unit.  The dripper unit is usually a high profile unit which can cause hooking and entangling with weeds, grass, etc. when pulled around a field when laying the irrigation unit.   All known bayonet systems are complex multi-component systems which are relatively expensive to manufacture and assemble because of mold costs and manual assembly costs.  Bayonet systems typically require a heavy wall pipe to properly hold the bayonet in place, and the inserted bayonet interferes with the free flow through the irrigation line.

The present invention provides an irrigation system with a single-component drip emitter unit that can be constructed at a much lower cost while overcoming disadvantages of the prior drip irrigation units described above.

Summary of the Invention

One embodiment of this invention provides a drip irrigation emitter for connection to the exterior of an irrigation supply pipe.  A wall formed on an inside surface of the emitter provides a boundary of a chamber for receiving water under pressure from the supply pipe. A labyrinthine channel inside the boundary of the chamber

13455:WGM                    -6-

provides a pressure drop in water admitted to the chamber. A region of bonding material on the inside surface of the emitter extends around the outside of the chamber boundary. The bonding material is adapted to bond the emitter to the exterior of the supply pipe so that water flowing in the supply pipe can pass through an opening in the supply pipe and into the chamber. The flow path for water through the labyrinth in the chamber is between the emitter and the exterior wall of the pipe, and water at the end of the labyrinth is discharged from the emitter at a drip rate.

The present invention also provides a method for making a drip irrigation unit from a supply pipe and a drip irrigation emitter, where an inside face of the emitter has a labyrinthine chamber formed inside an outer boundary. The method includes the steps of placing the inside face of the emitter over the exterior wall of the supply pipe, providing a region of a fusible bonding material around the outside of the chamber boundary and in contact with the exterior wall of the supply pipe, and fusing the bonding material to bond the emitter, around the outside of the chamber, to the exterior wall of the supply pipe. Water flowing in the supply pipe can pass through an opening in the pipe and into the sealed chamber for flowing along the labyrinth formed between the emitter and the exterior of the supply pipe. The fused bonding material forms a water-tight seal around the exterior of the chamber.

Thus, the present invention provides a single-component drip emitter unit, in which a single emitter is bonded to the exterior wall of a conventional irrigation pipe for forming the emitter unit. The emitter structure makes it possible to manufacture the unit at a low cost in a high speed molding process. The invention also provides other improvements described in more detail below.

Drawings

These and other aspects of the invention will be more fully understood by referring to the following detailed description and the accompanying drawings, in which:

FIG. 1 is a perspective view showing a drip irrigation unit according to principles of this invention;

FIG. 2 is a fragmentary cross-sectional view taken on line 2-2 of FIG. 1;

FIG. 3 is an enlarged fragmentary elevation view showing the underside of a drip irrigation emitter according to principles of this invention;

FIG. 4 is an enlarged fragmentary elevation view taken within the circle 4 of FIG. 3;

FIG. 5.is a cross-section taken on line 5-5 of FIG. 3;

FIG. 6 is a cross-section taken on line 6-6 of FIG. 3;

FIG. 7 is a cross-section taken on line 7-7 of FIG. 3.

FIG. 8 is an enlarged fragmentary elevation view, similar to FIG. 3, showing the underside of an alternate drip irrigation emitter; and

FIG. 9 is a cross-section, similar to FIG. 5, showing another alternate form of the drip irrigation emitter.

13455:WGM                    -8-

Detailed Description

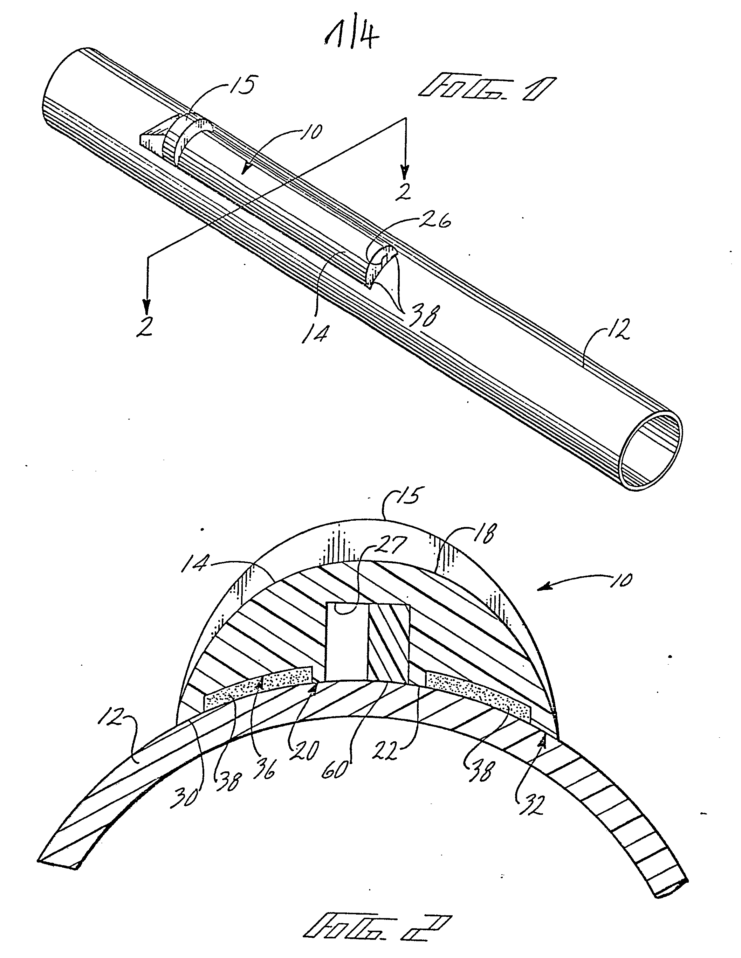

FIG. 1 is a perspective view showing a drip irrigation emitter unit 10 secured to the exterior wall of a conventional tubular irrigation supply pipe 12 of circular cross-section. The supply pipe is conventional in the sense that it has a smooth interior and exterior surface, i.e., no surface irregularities need be formed in the inside or outside wall of the supply pipe to conform to use with the emitter unit. In one embodiment, the supply pipe is made from a somewhat flexible, thin walled plastic material, e.g., a thermoplastic material such as polyethylene. The drip emitter unit can be made from a thermoplastic material, such as a polyethylene. In one embodiment, the emitter unit is made from the same material as the pipe, in part, to provide good adhesion between the emitter and the pipe. The emitter unit can be made from a flexible plastic material and adhered to a flexible thin walled plastic pipe.

Only one emitter unit is shown in the drawing for simplicity. In practice, a drip irrigation system can be formed by securing a number of such drip emitter units to a continuous irrigation water supply pipeline at intervals along the length of the pipeline. Each emitter unit taps off a portion of the water flowing through the pipeline and discharges the tapped off water at a low continuous drip rate.

The emitter body has an elongated principal portion 14 that makes up most of the length of the emitter. A narrow ridge 15 projects above one end of the principal portion of the emitter. The ridge is optional as is used for automatic handling of the emitter during the assembly process. The principal portion of the drip emitter is generally arcuate or U-shaped in cross-section, as the emitter is viewed

13455:WGM                    -9-

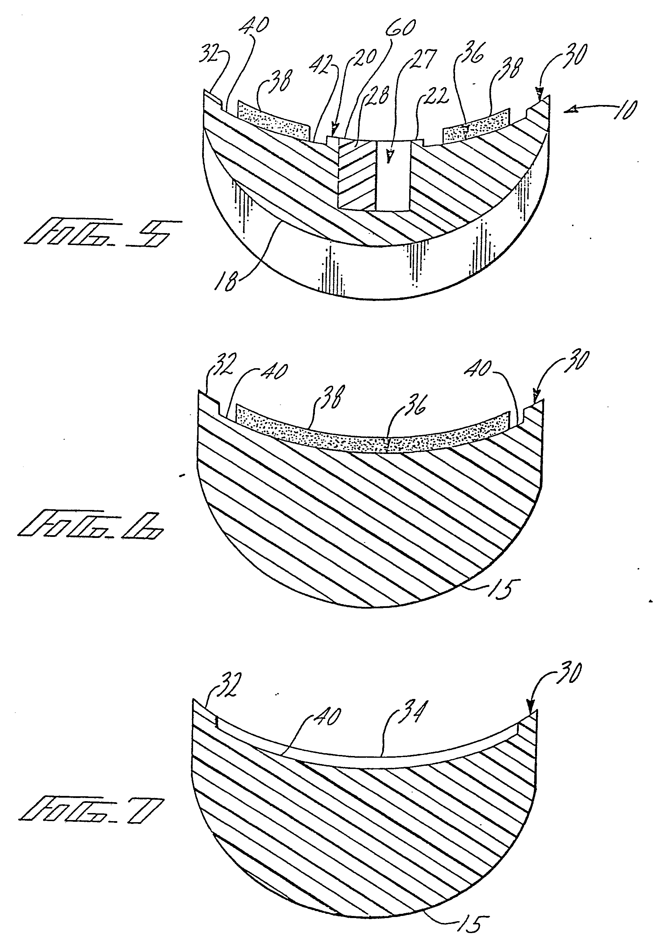

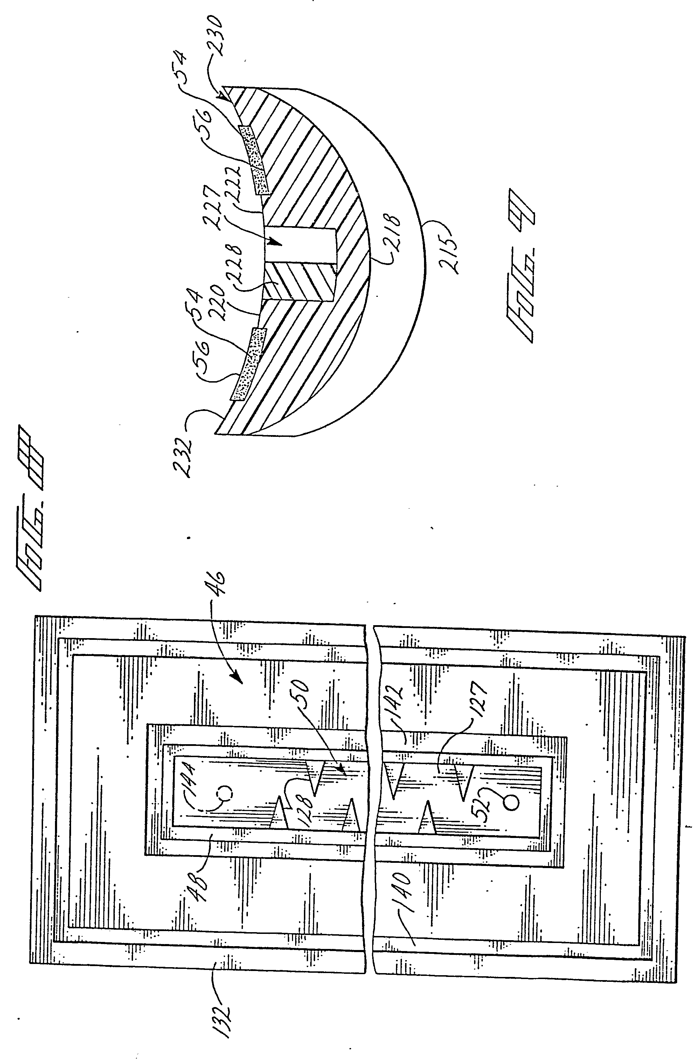

in FIG. 5; and such cross-sectional configuration is generally uniform along the length of the principal portion of the emitter. This arcuate cross-section is defined by a concavely curved inside surface 16 and a concavely curved outisde surface 18. The curvature of the inside surface is flatter, i.e., it has a greater radius of curvature than the radius of curvature of the outside surface of the emitter.

A chamber wall 20 projects away from the inside surface of the emitter to form a rectangular boundary of a chamber that extends along the central portion of the emitter. In the embodiment of FIGS. 1 through 7, the chamber wall is three-sided, having a pair of longitudinally extending, laterally spaced principal wall portions 22 extending parallel to one another for most of the length of the emitter. An end wall 24 joins the ends of the principal wall portions 22 near one end of the emitter. At the opposite end of the emitter the principal wall portions terminate to form an open discharge end 26 of the chamber.

As shown best in FIG. 5, a long narrow recess or passage 27 extends along the central portion of the emitter inside the boundary formed by the chamber wall 20.

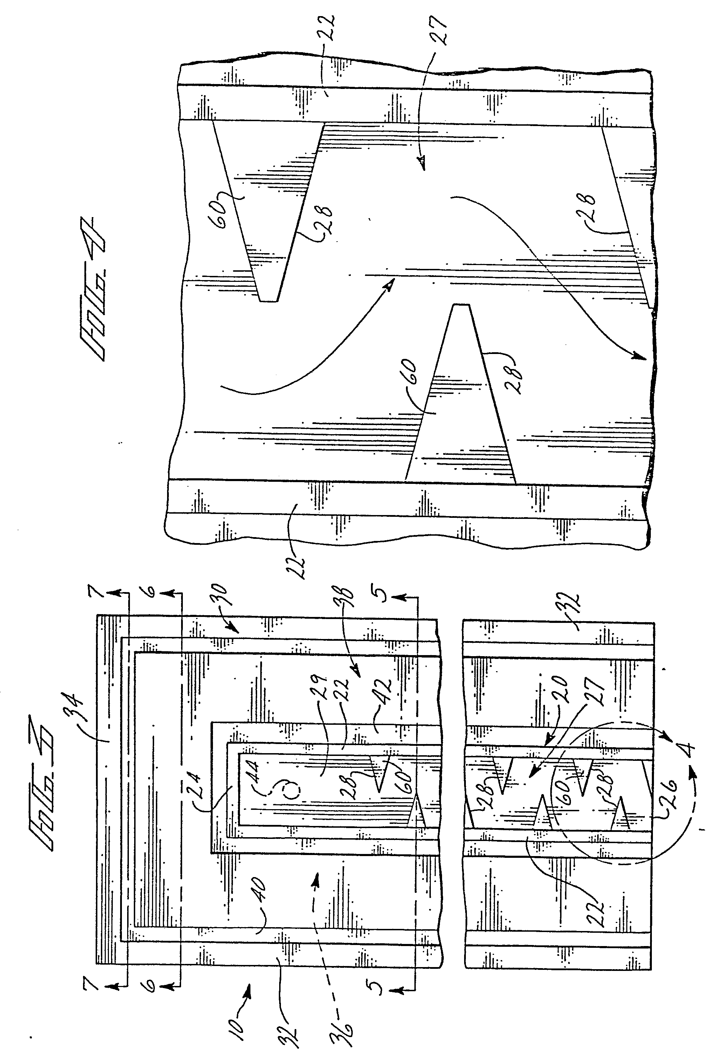

The interior of the chamber has a plurality of longitudinally spaced apart elongated ribs or teeth 28 that extend into the passage 27 from both principal wall portions of the chamber boundary. The ribs are interleaved along the length of the chamber and are generally parallel to one another and generally perpendicular to the long side boundaries of the chamber. The ribs thus form a continuous laybrinthine channel that constantly reverses its direction from an inlet end 29 of the chamber to the open discharge end 26 of the chamber. The ribs can have either pointed ends, as shown in FIG. 3, or truncated ends, as shown in FIG. 4. The arrows in FIG. 4 illustrate the continuous reversal of direction of water passing through the labyrinth formed within the chamber 20. As illustrated best in FIG. 5, the tops of the ribs or teeth 28 are continuous with the top edge of the chamber wall 20. Moreover, the top edges of the ribs are slightly curved concavely to match the general arcuate contour of the inside surface of the emitter.

The labyrinth produces a substantial pressure drop in the water passing through it for providing the desired drip rate at the discharge end. The particular labyrinth described is a turbulent flow labyrinth, in which the water spins as it passes into each section of the labyrinth, creating a pressure drop through internal frictional losses. The emitter also can have a laminar flow labyrinth, a vortex flow channel, or other means for producing the desired pressure reduction. For simplicity, the pressure reducing channel through the emitter will be referred to as a labyrinth, or a labyrinthine channel.

A narrow outer wall 30 projects away from the inside surface of the emitter to form a three-sided rectangular peripheral wall spaced outwardly from and extending around the outside of the three-sided chamber wall 20. The outer wall has a pair of longitudinally extending principal wall portions 32 extending parallel to the principal wall portions 22 of the chamber wall, and an end wall 34 ajoining the principal wall portions 32 along the end of the emitter opposite the discharge end of the emitter. The outer wall and the chamber wall both project away from the inside surface of the emitter by approximately the same distance.

A variety of methods can be used for securing the emitter to the exterior side wall of the supply pipe. For example, such plastic welding techniques as heat welding, spin welding, adhesive bonding, high frequency bonding, ultrasonic bonding, electromagnetic bonding, hot air welding, etc., can be used. However, I have discovered that best results for the thermoplastic materials used are provided when magnetic induction heat bonding techniques are used. In accordance with this bonding method, a generally U-shaped recessed region 36 (as viewed in FIG. 3) extends around the outside of the three-sided chamber wall 20 inside the three-sided outer wall 30, in the embodiments of FIGS. 1 through 7. A generally U-shaped block of bonding material 38 is disposed in the U-shaped recessed region 36 that surrounds the chamber wall. The block of bonding material is continuous, of generally uniform thickness, and is normally spaced inwwardly from the outer wall 30 and normally spaced outwardly from the chamber wall 20. This forms a continuous U-shaped outer groove 40 between the inside edge of the outer wall and the bonding material and it also forms a continuous U-shaped inner groove 42 between the outside edge of the inner wall and the bonding material, when the underside of the emitter is viewed as in FIG. 3.

The bonding material, generally, can be any of various materials capable of forming a reliable bond between the emitter and the exterior wall surface of the supply pipe 10. In one embodiment, the bonding material is a fusible material that is fused to a molten condition in which it creates a bond that welds or otherwise seals the emitter to the exterior wall of the supply pipe. In the illustrated embodiment using magnetic induction bonding techniques, the bonding material is a thermoplastic material filled with ferromagnetic

13455:WGM                    -12-

particles; and in one presently preferred embodiment, the bonding material is a high density polyethylene filled with iron powder.

FIG. 5 best illustrates one embodiment of the drip emitter unit in cross-section before it is welded to the exterior wall of the supply pipe. In this embodiment, the outer groove 40 and inner groove 42 are both shown on opposite sides of the solid block of bonding material 38, with the block of bonding material projecting away from the inside surface of the emitter farther than the top edges of both the chamber wall 20 and the outer wall 30. A small hole is drilled in the pipe wall prior to welding the emitter to the exterior wall of the pipe. The underside of the emitter, in the configuration shown in FIG. 5, is then placed against the exterior side wall of the pipe so the drill hole in the supply pipe (shown in phantom lines at 44 in FIG 3) communicates with the inlet end 29 of the labyrinthine chamber. In this position the block of bonding material makes continuous surface contact with the exterior wall of the supply pipe around the outside of the chamber boundary.

The emitter is then welded to a smooth continuous section of the exterior side wall of the pipe by electromagnetic induction heating techniques. According to such techniques, heat is generated in the bonding material by a variable magnetic field induced by a magnetic coil of a high frequency induction heating generator. The bonding material 38 is an electromagnetic energy absorbing material, both magnetizable and electrically conductive. Heat is rapidly generated when the bonding material is exposed to the magnetic field, and this heat is readily transferred to the abutting thermoplastic surfaces of the emitter and the supply pipe, rapidly raising their

0059922

13455:WGM                    -13-

temperatures to just in excess of their melting points, creating a heat bonded joint between the emitter and the supply pipe through the molten bonding material. As best illustrated in FIG. 2, the molten bonding material flows into the spaces previously occupied by the outer groove 40 and the inner groove 42 when forming the bond. The outer wall 30 and the chamber wall 20 act as continuous retaining walls on opposite sides of the U-shaped bond that extends around the outside of the chamber. The bond thus formed is a water-tight seal formed around the entire three-sided outside boundary of the chamber. Thus, the chamber is a closed internal chamber, except for the opening at its discharge end; and a flow path for water admitted to the closed internal chamber is lengthwise through the labyrinthine channel formed between the recess 27 in the emitter and the exterior wall of the supply pipe. The top edges of the teeth in the labyrinth are adhered to the exterior wall of the pipe when the emitter is sealed to the wall of the pipe.

In a presently preferred form of the invention, the electromagnetic bonding techniques used in bonding the emitter to the supply pipe are similar to those techniques described in "Design Criteria for Electromagnetic Bonding of Thermoplastic" by Mark Chookazian, EMABond Inc., Englewood, New Jersey; and in U.S. Patent Nos. 3,620,875 and 3,620,876, which are incorporated herein by this reference.

In one embodiment of the emitter, the volume of bonding material in the channel is about 103% to 104% of the volume of the channel itself. There are a total of 54 ribs in the labyrinth. The teeth are uniformly spaced apart along the length of the chamber, and the distance from center-to-center of adjacent teeth on

13455:WGM                    -14-

one side of the chamber is about 0.074 inch. The length of each tooth is identical, approximately 0.34 inch. The inner ends of the teeth on both sides of the channel terminate near the center axis of the chamber. The depth of the labyrinthine channel, i.e., the height of the teeth is about 0.068 inch. The width of the recess in which the bonding material is located is about 0.10 inch. The block of bonding material is about 0.015 inch thick. The length of the chamber is about 2.1 inch. The principal portion of the emitter is of low profile, having a maximum thickness of about 0.1 inch; and the width of this portion of the emitter is about 0.328 inch.

In using the drip irrigation unit, water under pressure of say 10 to 15 psi flows in the irrigation supply pipe. A small amount of the water in the supply pipe passes through the hole 44 in the pipe wall and into the labyrinthine channel in the sealed chamber, creating an appreciable presure drop along the path of the water as it flows from the inlet region of the labyrinth toward the discharge end of the labyrinth, where the water is discharged at a slow drip rate.

FIG. 8 shows an alternative form of the emitter in which a region of bonding material 46 similar to that described above extends around the entire outside of a wall 48 that projects away from the inside face of the emitter. The wall 48 forms a four-sided rectangular boundary around the entire outside of a labyrinthine channel 50 formed inside the boundary. In this embodiment, the bonding material forms a water-tight seal around the entire outside of the chamber; and water is discharged from the sealed chamber through a hole 52 drilled through the wall of the emitter at the discharge end of the labyrinth.

One end of the hole opens into the recess in which the labyrinth is formed and the other end opens through the exterior wall of the emitter.

FIG. 9 shows a further alternative embodiment of the emitter in which the narrow void spaces that extend around the outside and inside of the region of bonding material, as in FIGS. 1 through 7, are omitted. In the embodiment of FIG. 9, the bonding material is provided by an adhesive gasket 54 which is preferably a self-supporting four-sided rectangular gasket similar in shape to the region of bonding material 46 shown in the embodiment of FIG. 8. The adhesive gasket fits into a four-sided rectangular groove 56 that matches the configuration of the gasket. The groove extends around the entire outside of the wall that forms the boundary of the labyrinthine chamber. When in place in the groove, the top surface 58 of the gasket projects slightly above the adjacent inside surface of the emitter. In this embodiment, the volume of the gasket is about 104% of the volume occupied by the groove. The adhesive gasket is preferably made from a bonding material similar to the fusible bonding material described above; and the adhesive gasket can either be inserted into the mold for making the emitter, or it can be inserted into the groove formed in the emitter once the emitter is molded.

In another embodiment, the emitter can be a one-piece unit made entirely from the metal-filled plastic welding material. In this embodiment, portions of the emitter can be shielded during the welding operation, so that only the unshielded portion is welded to the exterior of the plastic pipe.

The drip irrigation unit has a number of advantages. For example, it can be used on either thick or thin walled pipes. This advantage enables it to be used not only for permanent drip irrigation installations, but also for temporary irrigation sites where relatively cheap irrigation supply pipes must be used.

Since the exterior wall of the supply pipe is the inside wall of the dripper unit, in a thin walled pipe, internal hydraulic pressure can push the pipe outward against the emitter and seal the exterior of the pipe to the tops of the labyrinth teeth. This seals the labyrinth against possible short circuiting of water flow and ensures a uniform drip rate.

The unit can be cut to any desired length in order to adjust pressure drop and therefore the rate of flow. Since the emitter unit is exterior of the irrigation supply pipe there is no hydraulic interference with flow through the interior of the supply pipe. As a result, the possible free flow is greater than for pipes having interior type emitter units. The unit is also of low exterior profile, which can avoid entangling with grass, weeds, etc., as the irrigation system is moved around a field.

In one embodiment, the emitter unit is designed with a curvature to enable it to adapt to irrigation supply pipes having diameters from about 12 mm to about 20 mm, whereas many drip irrigation units can only be used with pipes of one diameter. This is an important advantage because it enables selection of a supply pipe diameter for a particular field, depending upon the elevation irregularities in the field and the amount of free flow required between cross-feed lines. The unit can provide uniform flow rates and resistance to clogging at operating pressures between about 5 to 20 psi so that one can work on undulating ground with long distances between lateral lines, as well as on flat ground.

13455:WGM                    -17-

The drip irrigation unit also is a single-component unit that is inexpensive to make in a plastic molding process. The unit can be made in a low cost, high speed molding process, i.e, one that does not involve core pullers or split molds, but can be manufactured with very low capital cost per unit. The assembly process is easily automated, since one needs only to drill the small hole in the pipe wall and then automatically position and attach the emitter unit to the wall by the plastic welding techniques. In this manner, one can achieve the advantages of present more complex and expensive dripper units at a fraction of the cost.

Because the emitter can be used on irrigation pipes of differing diameters, this allows the irrigation system to be designed by optimizing the diameters of the pipes used, or by using pipes of different diameters based on agricultural habits of the farmer, or as limited by other constraints.

13455    <u>CLAIMS TO BE SUBMITTED FOR EXAMINATION</u>

1. A drip irrigation emitter for connection to the exterior of a supply pipe, the emitter having an inside surface and a wall formed on the inside surface of the emitter for forming a boundary of a chamber for receiving water under pressure from a supply pipe; a channel inside the boundary of the chamber for reducing the pressure of water admitted to the chamber; and a region of bonding material on the inside surface of the emitter, in which the bonding material is a fusible material capable of bonding a thermoplastic emitter to a thermoplastic pipe, and in which the bonding material is capable of being bonded to such a thermoplastic pipe by magnetic induction heating techniques, the region of bonding material extending around the outside of the chamber boundary for use in bonding the emitter to the exterior wall of the supply pipe, so that a seal can be formed between the emitter and the pipe around the outside of said chamber boundary for forming a sealed chamber for receiving water flowing from the supply pipe into the sealed chamber.

2. Apparatus according to claim 1 in which a labyrinthine channel is formed by one or more teeth inside the wall forming said boundary; and in which the bonding material projects beyond the top of the labyrinth teeth and the wall.

3. Apparatus according to claims 1 or 2 in which the bonding material is a ferromagnetic electrically-conductive material.

4.  A drip irrigation system comprising a supply pipe, an emitter having a channel, sealing means securing the emitter to the exterior wall of the supply pipe and forming a boundary around a closed chamber between the emitter and the exterior wall of the supply pipe, said boundary being formed around the outside of said channel, the supply pipe and emitter being made of thermoplastic materials, the sealing means comprising a fused bond between the exterior wall of the pipe and the emitter, the fused bond being formed by a material capable of bonding the emitter to the supply pipe by magnetic induction heating techniques, a first passage in the supply pipe leading into the closed chamber, and a second passage leading from the channel to the exterior of the emitter.

5.  Apparatus according to claim 4 in which the bonding material is a ferromagnetic electrically-conductive material.

6.  A method for making a drip irrigation unit from an elongated supply pipe and a drip irrigation emitter, wherein the emitter has a wall formed in its inside surface for forming a boundary of a chamber having a channel inside the boundary, the method comprising the steps of placing the inside surface of the emitter adjacent the exterior wall of the supply pipe, providing a region of fusible bonding material around the outside of the chamber boundary and in contact with the exterior wall of the supply pipe, the bonding material being capable of forming a bond between the supply pipe and the emitter by magnetic induction heating techniques, and fusing the bonding material by heat induced by a magnetic induction heating generator to bond the emitter to the exterior wall of the supply pipe to form a closed

0059922

Claim 6 continued . . .
internal fluid pressure-reducing chamber between the emitter and the exterior wall of the supply pipe, so that water flowing from the supply pipe can pass through an opening in the supply pipe and into the closed chamber for flowing through the channel.

7. The method according to claim 6 in which the pipe and the emitter portion in contact with the bonding material are thermoplastic materials.

8. The method according to claims 6 or 7 in which the bonding material is a ferromagnetic electrically-conductive material.

9. The method according to any of claims 6 to 8 in which the bonding material is a thermoplastic material filled at least in part with iron particles.

1/4

FIG. 1

FIG. 2

*Fig. 3*

*Fig. 4*

0059922

FIG. 5

FIG. 6

FIG. 7

FIG. 4B

FIG. 4

## DOCUMENTS CONSIDERED TO BE RELEVANT

| Category | Citation of document with indication, where appropriate, of relevant passages | Relevant to claim |
|---|---|---|
| A | US - A - 4 215 822 (R. MEHOUDAR) <br> * claim 1; fig. 1, 8, 10 * | 1,2,4 |
| A | AU - B - 484 446 (J.S. BARRAGAN) <br> * claims 1 to 3; fig. 1 to 5, 9 * | 2,4 |
| D,A | US - A - 3 620 875 (R.J. GUGLIELMO et al.) <br> * entire document * | 7-9 |
| D,A | US - A - 3 620 876 (R.J. GUGLIELMO et al.) <br> * entire document * | 7-9 |

**CLASSIFICATION OF THE APPLICATION (Int. Cl. 3)**

A 01 G 25/02

**TECHNICAL FIELDS SEARCHED (Int.Cl. 3)**

A 01 G 25/00

B 05 B 1/02

B 05 B 1/20

B 29 C 27/04

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 08-04-1982 | SCHOFER |